# EUROPEAN PATENT SPECIFICATION

(11) **EP 3 283 228 B1**
(45) Date of publication and mention of the grant of the patent: **04.06.2025**
(21) Application number: 16733219.6
(22) Date of filing: 14.04.2016
(51) Int. Cl.: B05B 9/01, B08B 3/00, B08B 15/00, B09B 3/00, C09K 3/22

(54) **FOAM SUITABLE FOR CAPTURING DUST PARTICLES, METHOD FOR CAPTURING DUST PARTICLES**
SCHAUMSTOFF GEEIGNET ZUM EINFANGEN VON STAUBPARTIKELN, VERFAHREN ZUR ERFASSUNG VON STAUBPARTIKELN
MOUSSE ADAPTÉE À LA CAPTURE DE PARTICULES DE POUSSIÈRE, PROCÉDÉ DE CAPTURE DE PARTICULES DE POUSSIÈRE

(30) Priority: 14.04.2015 NL 2014633
(43) Date of publication of application: 21.02.2018
(73) Proprietor: Hemubo Almere B.V., 1332 EA Almere (NL)
(72) Inventor: VAN TONGEREN, Willem Lambertus Cornelis, 1336 CZ Almere (NL)
(74) Representative: Patentwerk B.V.
(86) International application number: PCT/NL2016/050261
(87) International publication number: WO 2016/167657

(56) References cited:
- EP-A1- 1 674 560
- US-A- 5 872 088
- US-A1- 2006 229 227

## Description

The invention relates to a foamable mixture for a foam which is suitable for capturing dust particles. A foam of this type can be used when working on a substrate when there is a risk that dust particles that are harmful to the environment and to health may be released from the substrate. In general, this means dust particles which become suspended in the air and as a result adversely affect, for example, the airways or skin. Examples of dust particles which should be prevented from being released to become suspended in the air include fine dust, asbestos fibres and mould.

Such work may, for example, include drilling or some other way completely or partially removing the substrate as part of renovation or redevelopment work on a building. The work may equally comprise simply cleaning substrate surfaces.

In particular when carrying out work during which asbestos particles and/or asbestos fibres may be released, safety standards are set very high, on account of the high risk to people carrying out such work. Traditionally, when removing asbestos from a building, an enclosed space is created with a reduced pressure therein. People inside this space wear special protective clothing, including protection for the airways and face. The reduced pressure causes the air in the space to be continually extracted before being passed across a HEPA filter, so that dust particles which have been released into the air are removed and/or captured. Although widespread, this method is expensive and also laborious for those carrying out the work. In addition, workers may only spend a limited time working under these conditions.

In this context, US Patent Application US 2007/0295369 proposes applying a foam to locations in a building from which dust particles may be released during work. The foam is formed from a precursor, i.e. a foamable mixture, which is mixed with an expansion gas. The foamable mixture is then sprayed using a spraying device to form a foam layer. The foam layer should be thixotropic, i.e. of a nature such that the foam is stable under static conditions and flows under dynamic conditions (for example under shear forces exerted on the foam). As a result, during drilling work and the like, wherein shear forces are exerted on the foam, the foam is able to flow and reach even deeper-lying areas, where dust particles are also released. The composition for the foam is marketed under the trade name "Foamshield" sold by the company Foamshield Europe.

After work has been completed, the foam together with the dust particles that have been captured therein are removed using a cloth and transferred to a suitable container.

Tests carried out using the foam composition "Foamshield" have shown that the foam that is formed only remains on a selected surface for a short time. On a vertical wall, the foam begins to slide down the wall only a few seconds after it has been applied, with the result that a foam layer with sufficient coverage is only present for a few minutes. The adhesion of the foam to the base is thus inadequate for application to vertical walls. The same problem applies to the foam when it is applied to a ceiling. It has also been found that the foam flows relatively quickly on a floor, even without the influence of dynamic conditions. What is known as the drainage time of the foam, i.e. the time taken for the foam to separate into a liquid, is relatively short. If a substrate to which the foam has been applied is cut into, for example using a grinding wheel, the flow is even quicker on account of the thixotropic character, and the foam layer will inevitably move away from the original location. These drawbacks make the foam composition somewhat unsuitable for operation as a dust catcher, since the work must be carried out within in relative terms a very short time in order to prevent the foam composition from having largely disappeared and thus being insufficiently active as a catcher of dust particles.

For offering further context to the present invention, reference is additionally made to the US patent application US5872088 A which relates to aqueous cleaning compositions of a similar nature.

It is an object of the invention to provide a foamable mixture for a foam which, when sprayed to form a foam layer, gives better results compared to the prior art. As well as a foam layer having improved adhesion to a base, this objective also requires a sufficient stability of the foam that is formed, expressed as what is known as the drainage time, defined by the period of time during which 50% of the foam has separated into a liquid after application. In addition, the invention aims to achieve a good level of foaming of the composition, which is expressed in an expansion ratio, representing the ratio between the volume of foam formed and the volume of the foamable mixture.

To achieve the above objective, a first aspect of the invention provides a foamable mixture which comprises water and a starting composition for a foam according to claim 1.

In the invention, the starting composition for a foam which is suitable for capturing dust particles comprises:
- 1 to 20% by weight of glycol ether fraction,
- 5 to 15% by weight of fatty alcohol fraction,
- 0.1 to 10% by weight of amine oxide fraction, and
- 1 to 20% by weight of fatty alcohol sulphate fraction,
wherein the fatty alcohol sulphate fraction comprises one or more fatty alcohol ether sulphates, preferably fatty alcohol ether sulphates which comprise C12-C14 fatty alcohols.

Furthermore according to the invention, the water-based foamable mixture comprises 2 to 5% by weight of the starting composition.

In the invention, the fatty alcohol sulphate is a surfactant and is therefore a suitable component for lowering the surface tension of the foamable mixture.

With the above indicated contents of the fractions in the starting composition, the foamable mixture has proven to be effective at achieving the objectives of the invention.

It has been found that if the above starting composition is mixed with water in a suitable ratio to form a foamable mixture which is then sprayed in a suitable way, the result is a foam layer with better adhesion to a base, with the result that sliding off vertical walls or dripping off ceilings occurs less quickly.

Moreover, the foam layer that is formed has proven to be sufficiently stable over time. Moreover, the composition has a suitable expansion ratio of, for example, 8 to 20 using conventional spraying devices.

In the present context, the term "capturing" means that the foam can trap loose dust particles in the foam structure, i.e. it acts as an absorbent agent, and relates in particular to situations in which dust particles are released when working on a substrate.

An additional advantage achieved by the increased time of adhesion of the foam layer to the base, relates to a concomitant increased adsorption of other soiling material so that the foam layer has an improved cleaning effect in general.

Still, the capacity of capturing of dust particles is the main property of the foam according to the invention.

Preferably, the starting composition used in the invention is a liquid concentrate that preferably comprises water and more preferably 10 to 60% by weight water.

A liquid concentrate has the advantage of being easy to handle and readily miscible in larger volumes of water.

In the starting composition used in the invention, it is preferable for the glycol ether fraction to comprise one or more glycol diethers, preferably 2-(2-butoxyethoxy)ethanol. This glycol ether is a suitable component for increasing the solubility of the composition.

In the starting composition used in the invention, it is preferable for the fatty alcohol fraction to comprise one or more C12-C16 fatty alcohols.

In the starting composition used in the invention, it is preferable for the amine oxide fraction to comprise one or more trialkylamine-N-oxides, preferably coco-alkyldimethylamine-N-oxide. This amine oxide is a surfactant and thus a suitable component for lowering the surface tension of the foamable mixture.

For the sake of clarity, it is noted that coco-alkyl means a C12-C18 alkyl group.

For example, the fatty alcohol sulphate is used in the form of the sodium salt thereof.

An example of a suitable starting composition which is useful for the invention, is given below with the remainder being water.

| Constituent | Concentration |
|---|---|
| 2-(2-butoxyethoxy)ethanol | 5 to 15% by weight |
| C12-16 fatty alcohols | 5 to 15% by weight |
| Coco-alkyldimethylamine-N-oxide | 0.2 to 2.0% by weight |
| Sodium C12-14 fatty alcohol ether sulphate | 5 to 15% by weight |

A starting composition useful for the invention is brought to the market under the name "Dustcover", "Fibrecover" or "Fibercover".

A water-based foamable mixture which comprises 2 to 5% by weight of the starting composition, is directly useable for spraying to form a foam layer using a suitable spraying device. For the foamable mixture, it is particularly preferable to use a content of 3 to 4% by weight.

In this context, it is preferable for the foamable mixture according to the invention to have a surface tension of 20-40 mN/m, in particular 22-32 mN/m.

Moreover, it is preferable for the foamable mixture according to the invention to have a viscosity of 40-80 mPa.s.

Particularly preferably, the foamable mixture according to the invention has an expansion ratio in the range from 8 to 20.

A second aspect of the invention relates to a method for capturing dust particles which may be released when working on a substrate, comprising the steps of:
- mixing a gas with a foamable mixture according to the first aspect of the invention, and
- pressurized spraying of the foamable mixture mixed with a gas from a spraying device onto the substrate before the work is commenced,
wherein a foam layer is formed on the substrate, which foam layer has a drainage time of at least 20 minutes, and preferably at least half an hour, in accordance with NEN-EN 1568.

Any suitable excess pressure can be used for the method according to the invention, with an excess pressure of 2 to 4 bar, in particular 2.5 to 3 bar, being preferred. The gas used may, for example, be air.

Optionally, the foam may contain a relatively large amount of air, so that flakes are formed. Accordingly, less liquid remains in the rooms that have been treated. Futhermore, it can be considered to fill a whole room with flakes, when practically feasible.

Preferably, the method according to the invention comprises the step of removing the foam layer on the substrate after the work on the substrate has been carried out.

For example, the foam layer is removed using a cloth which is then treated as waste.

In the method according to the invention, it is preferable to use a foamable mixture according to the abovementioned specific aspect of the invention.

Especially preferably, in the method according to the invention, a spraying device is used which comprises:
- a tank for a foamable mixture which is pressurized by a gas,
- a spraying head for spraying the foamable mixture,
- a conduit for feeding the foamable mixture from the tank to the spraying head,
- a gas inlet in the conduit for mixing the gas and the foamable mixture,
and wherein a porous solid structure, which functions as a passage for the foamable mixture, is present in the conduit between the gas inlet and the spraying head, over the course of which passage a pre-foam is formed from the foamable mixture.

The porous solid structure increases the mixing of the foamable mixture that is liquid with the gas, with more gas becoming dispersed in the foamable mixture. This creates a foamable mixture with a high gas content, which in this context is referred to as a pre-foam.

When the abovementioned spraying device is used for the method according to the invention, it is preferable for two porous solid structures to be present at a distance from one another in the conduit between the gas inlet and the spraying head, both of which solid structures function as a passage for the foamable mixture.

Incorporating two porous solid structures into the conduit increases the effectiveness with which a pre-foam is formed.

As seen in the direction of flow of the foamable mixture from the mixing chamber to the spraying head, by way of example there is provided a first porous solid structure which is composed of a mesh-like material that preferably has an elongate, conical shape. At a distance downstream there is provided a second porous solid structure, which is preferably configured as a barrier wall of a certain thickness with an open-cell structure.

The tank is preferably suitable for being placed under a gas pressure of 2 to 4 bar, being pressures at which it is preferable to work according to the invention. Moreover, it is provided that the tank has an inlet for foamable mixture and an inlet for gas, so that both substances can be refilled into the tank after they have been used up during use of the device.

Other preferred embodiments of the spraying device which is used for the method according to the invention include:
- a decrease in the cross section of the conduit between the two solid porous structures in the direction towards the spraying head; and/or
- a spraying head which has a substantially slit-shaped exit.

A decrease in the cross section of the conduit in the direction towards the spraying head increases the velocity of the foamable mixture passed through it, and thereby assists the formation of pre-foam within the conduit as well as the formation of foam that leaves the spraying head.

When the foamable mixture or the pre-foam leave the spraying device through a spraying head which has a substantially slit-shaped exit, the result is a wide, flat jet which has proven effective at achieving the advantages of the invention.

In the context of the present invention, a spraying device is hereby disclosed, which comprises:
- a tank for a foamable mixture which is pressurized by a gas,
- a spraying head for spraying the foamable mixture,
- a conduit for feeding the foamable mixture from the tank to the spraying head,
- a gas inlet in the conduit for mixing the gas and the foamable mixture,
wherein the tank is a closed chamber without inlet, which comprises a quantity of the foamable mixture according to the first aspect of the invention.

A spraying device of this type can be used directly without the need for external means for building up a gas pressure. A spraying device of this type functions as an aerosol can and is intended for direct single use: the closed chamber without an inlet does not permit the tank to be topped up with additional quantities of foamable mixture and gas.

The invention will be explained below with reference to the accompanying figures, in which:
- Figure 1 diagrammatically depicts a spraying device which is useful for applying the invention;
- Figures 2a and 2b show partially cut-away parts of the device from Figure 1;
- Figure 3 shows the use of the spraying device during the application of a foam layer to a substrate from which dust particles may be released during work;
- Figures 4a-c show the results of a comparative test of the adhesion of a foam layer based on a foamable mixture according to the prior art and a foamable mixture according to the invention.

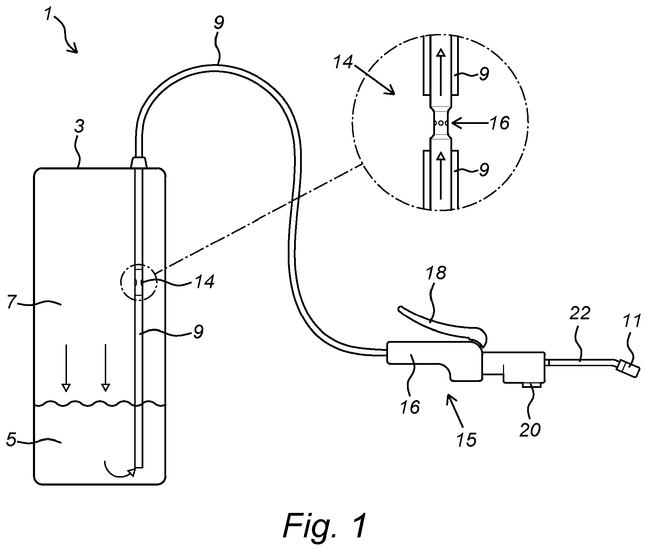

Figure 1 shows a spraying device 1 having a tank 3 for a foamable mixture 5 which is pressurized by a gas 7 that in this case is air. The foamable mixture is a solution in water of 3% by weight of starting composition according to the example above. A spraying head 11 is provided for the purpose of spraying a foamable mixture, as is a conduit 9 for supplying the foamable mixture from the tank 3 to the spraying head 11. A gas inlet 14 is provided in the first part of the conduit 9 for mixing the gas 7 and the foamable mixture 5. The circle shows an enlarged excerpt view of the gas inlet 14, with the conduit 9 being provided, at the location of a narrowing, with small through-holes 16 for the admission of gas, with the result that when the foamable mixture 5 is being passed through the conduit 9 gas is mixed into it. At the end of the conduit 9 there is an actuating element 15 for the user comprising a grip 16, a metering handle 18 and a pressure gauge 20. An extension tube 22 connects the conduit system in the actuating element 15 to the spraying head 11.

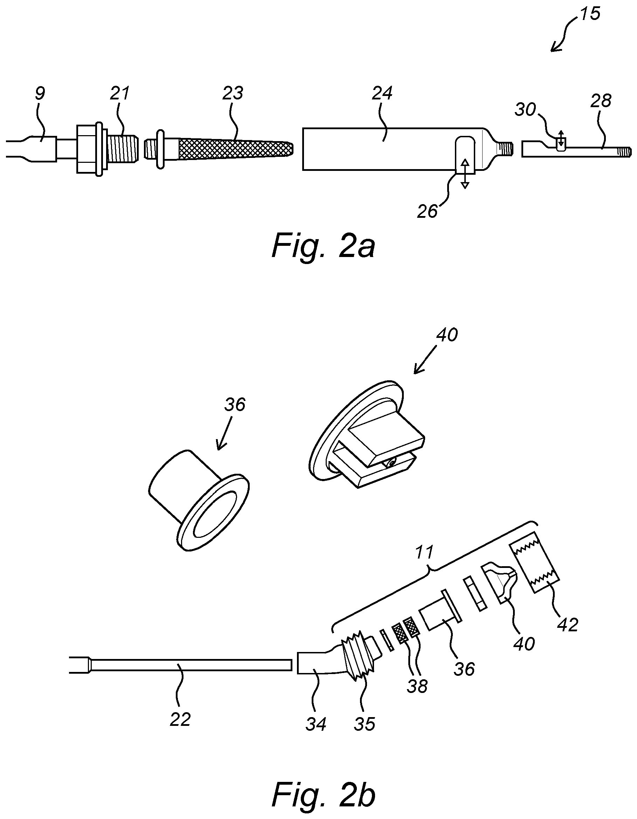

Fig. 2a shows, separately from one another, the components of the conduit system in the actuating element 15, comprising:
- a coupling piece 21 for coupling conduit 9 to a tube 24 with a narrowed end and provided with a main valve 26,
- a narrowed tube 28 that can be coupled to the end of tube 24 and is provided with a metering valve 30,
- a filter 23 of mesh-like material in the form of a closed cone, which is also connected to the coupling piece 21 and through which, in use, the foamable mixture flows before it flows into the tube 24.

Fig. 2b shows, separately from one another, the components of the conduit system from the actuating element 15 to the spraying head 11, comprising:
- the extension tube 22,
- an end tube 34 with bendable part 35,
- the dismantled components of spraying head 11, comprising:
   - a sleeve-shaped end 36 for carrying the foamable mixture from the end tube 34 to the spray nozzle,
   - two barrier bodies 38 having a porous open-cell structure allowing throughflow and disposed in the end 36,
   - a spray nozzle 40,
   - a protective cap 42.

For the sake of clarity, the components 36 and 40 of the spray nozzle are illustrated in three-dimensional, enlarged form at the top of Fig. 2b.

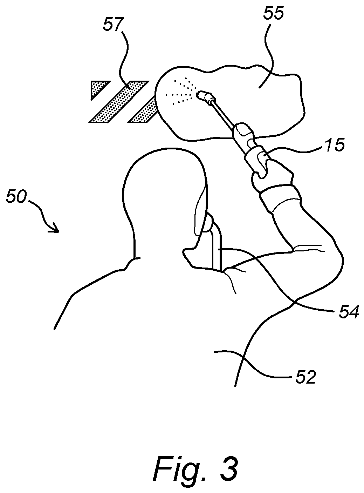

Fig. 3 shows a user 50 wearing protective clothing 52 with respiratory protection 54, who is directing the actuating element 15 of the spraying device onto a substrate 57 onto which he is spraying a foam layer 55 in accordance with the method of the invention. After the substrate 57 has been completely covered with the foam layer 55, work can be carried out on the substrate while virtually preventing any dust particles from being released from the substrate into the air, thus constituting a risk to the person carrying out the work.

The invention is explained in more detail below on the basis of an example, in which the invention is compared with a starting composition that is commercially available under the name "Foamshield".

### Comparative test of the foamable mixture

A starting composition comprising components according to the table below with the addition of water up to a total of 100% by weight was then diluted to a 3% by volume solution in water. In the context of the present application, this solution is referred to as a foamable mixture.

| Constituent | Concentration |
|---|---|
| 2-(2-butoxyethoxy)ethanol | 5 to 15% by weight |
| C12-16 fatty alcohols | 5 to 15% by weight |
| Coco-alkyldimethylamine-N-oxide | 0.2 to 2.0% by weight |
| Sodium C12-14 fatty alcohol ether sulphate | 5 to 15% by weight |

In accordance with NEN-EN 1568, the following properties of the 3% by volume solution were measured:

| Property | Measured value |
|---|---|
| Density | 1.01 |
| Dispersion coefficient | < 3 mN/m |
| Expansion ratio* | 9.0 |
| 50% Drainage time* | 31 minutes |
| Surface tension | 27 mN/m |
| Viscosity | 60 mPa.s |

| | |
|---|---|
| *Measured after spraying of a foam layer onto a flat substrate by spraying the foamable mixture using a suitable spraying device, in accordance with NEN-EN 1568. | |

A comparative test was carried out using a 3% by volume solution of the concentrate named "Foamshield". For a sprayed-on foam layer of "Foamshield", an expansion ration of 10.0 and a 50% drainage time of 7 min 10 sec were measured.

The foamable mixture according to the invention has a suitable and comparable expansion ratio, while the 50% drainage time is greatly increased compared to "Foamshield" from 7 minutes to approximately half an hour.

The Foamshield solution was sprayed using a suitable spraying device onto a smooth vertical concrete wall over a pre-marked area. In the same way and under the same conditions, the foamable mixture according to the invention was sprayed onto a smooth vertical concrete wall over a pre-marked area. This test was carried out in order to compare the adhesion quality of the two foam layers.

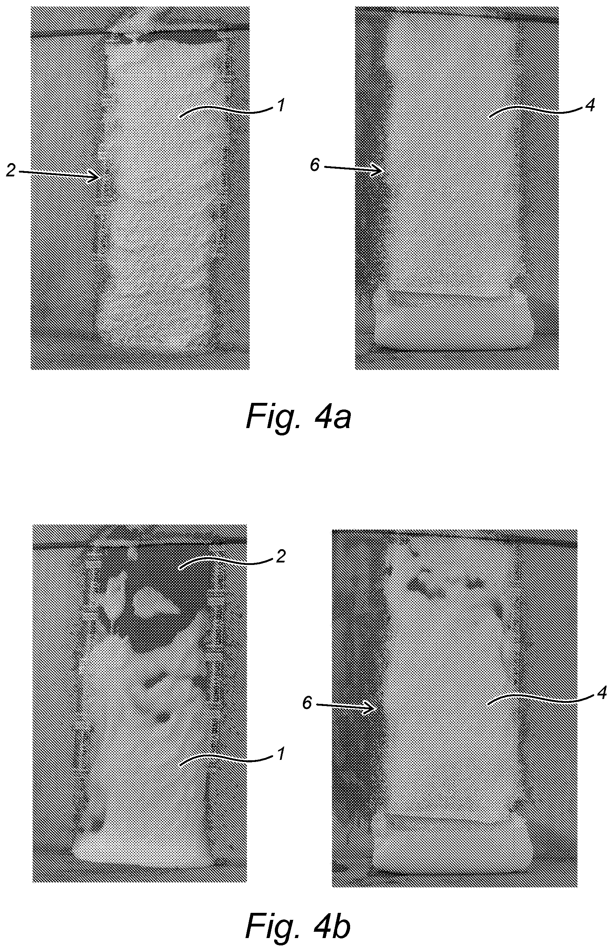

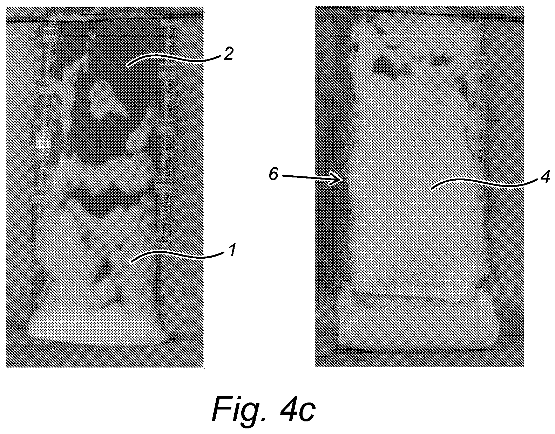

The foam layer obtained and its profile is shown in the photographs of Figures 4a (30 sec after application), 4b (120 sec after application) and 4c (180 sec after application). The left-hand photo shows the foam layer 1 of "Foamshield", while the right-hand photo shows the foam layer 4 of a foamable mixture according to the invention.

It can be seen from the figures that after just 120 seconds, approximately half of the "Foamshield" foam layer has slid off the marked sprayed area 2, and after 180 seconds almost 75% of the area 2 is no longer covered by the foam layer. By contrast, the foam layer obtained in accordance with the invention can be seen still to provide a very high level of coverage on the vertical surface 6 even after 180 seconds.

The foam layer obtained in accordance with the invention therefore has an improved adhesion to substrates with a smooth surface compared to a "Foamshield" foam layer. It is highly likely that the improved 50% drainage time plays a crucial role in this.

## Claims

1. Foamable mixture which comprises water and a starting composition for a foam in a suitable ratio such that the foamable mixture comprises 2 to 5% by weight of the starting composition, wherein the foam is suitable for capturing dust particles, and wherein the starting composition comprises:
- 1 to 20% by weight of a glycol ether fraction,
- 5 to 15% by weight of a fatty alcohol fraction,
- 0.1 to 10% by weight of an amine oxide fraction, and
- 1 to 20% by weight a fatty alcohol sulphate fraction,
wherein the fatty alcohol sulphate fraction comprises one or more fatty alcohol ether sulphates, preferably fatty alcohol ether sulphates which comprise C12-C14 fatty alcohols.

2. Foamable mixture according to Claim 1, wherein the starting composition is a liquid concentrate that comprises 10 to 40% by weight of water.

3. Foamable mixture according to one of the preceding claims, wherein the starting composition comprises:
- 5 to 15% by weight of the glycol ether fraction,
- 0.2 to 2.0% by weight of the amine oxide fraction,
- 5 to 15% by weight of the fatty alcohol sulphate fraction.

4. Foamable mixture according to one of the preceding claims, wherein the glycol ether fraction comprises one or more glycol diethers, preferably 2-(2-butoxyethoxy)ethanol.

5. Foamable mixture according to one of the preceding claims, wherein the fatty alcohol fraction comprises one or more C12-C16 fatty alcohols.

6. Foamable mixture according to one of the preceding claims, wherein the amine oxide fraction comprises one or more trialkylamine-N-oxides, preferably coco-alkyldimethylamine-N-oxide.

7. Foamable mixture according to one of the preceding claims, having a surface tension of 20-40 mN/m, in particular 22-32 mN/m.

8. Foamable mixture according to one of the preceding claims, having a viscosity of 40-80 mPa.s.

9. Foamable mixture according to one of the preceding claims, having an expansion ratio of 8 to 20.

10. Method for capturing dust particles which may be released when working on a substrate, comprising the steps of:
- mixing a gas with a foamable mixture according to one of the preceding claims, and
- pressurized spraying of the foamable mixture mixed with a gas from a spraying device onto the substrate before the work is commenced, wherein a foam layer is formed on the substrate, which foam layer has a 50% drainage time of at least 20 minutes, and preferably at least half an hour, in accordance with NEN-EN 1568.

11. Method according to Claim 10, comprising the step of removing the foam layer on the substrate after the work on the substrate has been carried out.

12. Method according to one of Claims 10 or 11, wherein the spraying device comprises:
- a tank for a foamable mixture which is pressurized by a gas,
- a spraying head for spraying the foamable mixture,
- a conduit for feeding the foamable mixture from the tank to the spraying head,
- a gas inlet in the conduit for mixing the gas and the foamable mixture,
wherein a porous solid structure, which functions as a passage for the foamable mixture, is present in the conduit between the gas inlet and the spraying head, over the course of which passage a pre-foam is formed from the foamable mixture.

## Patentansprüche

1. Schäumbares Gemisch, das Wasser und eine Ausgangszusammensetzung für einen Schaum in einem geeigneten Verhältnis umfasst, sodass das schäumbare Gemisch 2 bis 5 Gewichts-% der Ausgangszusammensetzung umfasst, wobei der Schaum zum Einfangen von Staubpartikeln geeignet ist, und wobei die Ausgangszusammensetzung Folgendes umfasst:
- 1 bis 20 Gewichts-% einer Glykoletherfraktion,
- 5 bis 15 Gewichts-% einer Fettalkoholfraktion,
- 0,1 bis 10 Gewichts-% einer Aminoxidfraktion und
- 1 bis 20 Gewichts-% einer Fettalkoholsulfatfraktion,
wobei die Fettalkoholsulfatfraktion ein oder mehrere Fettalkoholethersulfate, vorzugsweise Fettalkoholethersulfate, die C12-C14-Fettalkohole umfassen, umfasst.

2. Schäumbares Gemisch nach Anspruch 1, wobei die Ausgangszusammensetzung ein flüssiges Konzentrat ist, das 10 bis 40 Gewichts-% Wasser umfasst.

3. Schäumbares Gemisch nach einem der vorherigen Ansprüche, wobei die Ausgangszusammensetzung Folgendes umfasst:
- 5 bis 15 Gewichts-% der Glykoletherfraktion,
- 0,2 bis 2,0 Gewichts-% des Aminoxidanteils,
- 5 bis 15 Gewichts-% der Fettalkoholsulfatfraktion.

4. Schäumbares Gemisch nach einem der vorherigen Ansprüche, wobei die Glykoletherfraktion einen oder mehrere Glykoldiether, vorzugsweise 2-(2-Butoxyethoxy)ethanol, umfasst.

5. Schäumbares Gemisch nach einem der vorherigen Ansprüche, wobei die Fettalkoholfraktion einen oder mehrere C12-C16-Fettalkohole umfasst.

6. Schäumbares Gemisch nach einem der vorherigen Ansprüche, wobei die Aminoxidfraktion ein oder mehrere Trialkylamin-N-oxide, vorzugsweise Kokosalkyldimethylamin-N-oxid, umfasst.

7. Schäumbares Gemisch nach einem der vorherigen Ansprüche das eine Oberflächenspannung von 20-40 mN/m, insbesondere 22-32 mN/m, aufweist.

8. Schäumbares Gemisch nach einem der vorherigen Ansprüche, das eine Viskosität von 40-80 mPa.s aufweist.

9. Schäumbares Gemisch nach einem der vorherigen Ansprüche, das ein Expansionsverhältnis von 8 bis 20 aufweist.

10. Verfahren zum Einfangen von Staubpartikeln, die bei Bearbeiten eines Substrats freigesetzt werden können, umfassend die folgenden Schritte:
- Mischen eines Gases mit einem schäumbaren Gemisch nach einem der vorherigen Ansprüche, und
- druckbeaufschlagtes Sprühen des schäumbaren Gemischs gemischt mit einem Gas aus einer Sprühvorrichtung auf das Substrat vor Beginn der Arbeit, wobei auf dem Substrat eine Schaumschicht gebildet wird, die eine 50 %ige Entwässerungszeit von mindestens 20 Minuten, vorzugsweise mindestens einer halben Stunde, gemäß NEN-EN 1568 aufweist.

11. Verfahren nach Anspruch 10, umfassend den Schritt eines Entfernens der Schaumschicht auf dem Substrat, nachdem die Arbeit an dem Substrat durchgeführt worden ist.

12. Verfahren nach einem der Ansprüche 10 oder 11, wobei die Sprühvorrichtung Folgendes umfasst:
- einen Behälter für ein schäumbares Gemisch, das durch ein Gas unter Druck gesetzt wird,
- einen Sprühkopf zum Sprühen des schäumbaren Gemischs,
- eine Leitung zum Zuführen des schäumbaren Gemischs aus dem Behälter zu dem Sprühkopf,
- einen Gaseinlass in der Leitung zum Mischen des Gases und des schäumbaren Gemischs,
wobei in der Leitung zwischen dem Gaseinlass und dem Sprühkopf eine poröse Feststoffstruktur vorhanden ist, die als Durchgang für das schäumbare Gemisch fungiert, wobei im Verlauf des Durchgangs ein Vorschaum aus dem schäumbaren Gemisch gebildet wird.

## Revendications

1. Mélange moussant qui comprend de l'eau et une composition de départ pour une mousse dans un rapport approprié tel que le mélange moussant comprend de 2 à 5 % en poids de la composition de départ, dans lequel la mousse est appropriée pour capturer des particules de poussière, et dans lequel la composition de départ comprend :
- de 1 à 20 % en poids d'une fraction d'éther de glycol,
- de 5 à 15 % en poids d'une fraction d'alcool gras,
- de 0,1 à 10 % en poids d'une fraction d'oxyde d'amine, et
- de 1 à 20 % en poids d'une fraction de sulfate d'alcool gras,
dans lequel la fraction de sulfate d'alcool gras comprend un ou plusieurs sulfates d'éther d'alcool gras, de préférence des sulfates d'éther d'alcool gras qui comprennent des alcools gras en C12-C14.

2. Mélange moussant selon la revendication 1, dans lequel la composition de départ est un concentré liquide qui comprend de 10 à 40 % en poids d'eau.

3. Mélange moussant selon l'une des revendications précédentes, dans lequel la composition de départ comprend :
- de 5 à 15 % en poids de la fraction d'éther de glycol,
- de 0,2 à 2,0 % en poids de la fraction d'oxyde d'amine,
- de 5 à 15 % en poids de la fraction de sulfate d'alcool gras.

4. Mélange moussant selon l'une des revendications précédentes, dans lequel la fraction d'éther de glycol comprend un ou plusieurs diéthers de glycol, de préférence le 2-(2-butoxyéthoxy)éthanol.

5. Mélange moussant selon l'une des revendications précédentes, dans lequel la fraction d'alcool gras comprend un ou plusieurs alcools gras en C12-C16.

6. Mélange moussant selon l'une des revendications précédentes, dans lequel la fraction d'oxyde d'amine comprend un ou plusieurs N-oxydes de trialkylamine, de préférence le N-oxyde de coco-alkyldiméthylamine.

7. Mélange moussant selon l'une des revendications précédentes, ayant une tension superficielle de 20-40 mN/m, en particulier de 22-32 mN/m.

8. Mélange moussant selon l'une des revendications précédentes, ayant une viscosité de 40 à 80 mPa.s.

9. Mélange moussant selon l'une des revendications précédentes, ayant un taux de dilatation de 8 à 20.

10. Procédé pour capturer des particules de poussière qui peuvent être libérées lors du travail sur un substrat, comprenant les étapes consistant à :
- mélanger un gaz avec un mélange moussant selon l'une des revendications précédentes, et
- pulvériser sous pression le mélange moussant mélangé avec un gaz à partir d'un dispositif de pulvérisation sur le substrat avant le début du travail, dans lequel une couche de mousse est formée sur le substrat, laquelle couche de mousse a un temps de drainage de 50 % d'au moins 20 minutes, et de préférence d'au moins une demi-heure, conformément à la norme NEN-EN 1568.

11. Procédé selon la revendication 10, comprenant l'étape consistant à retirer la couche de mousse sur le substrat après que le travail sur le substrat a été effectué.

12. Procédé selon l'une des revendications 10 ou 11, dans lequel le dispositif de pulvérisation comprend :
- un réservoir pour un mélange moussant qui est pressurisé par un gaz,
- une tête de pulvérisation pour pulvériser le mélange moussant,
- un conduit pour amener le mélange moussant du réservoir à la tête de pulvérisation,
- une entrée de gaz dans le conduit pour mélanger le gaz et le mélange moussant,
dans lequel une structure solide poreuse, qui fonctionne comme un passage pour le mélange moussant, est présente dans le conduit entre l'entrée de gaz et la tête de pulvérisation, au cours de laquelle une pré-mousse est formée à partir du mélange moussant.
